# EUROPÄISCHE PATENTSCHRIFT

(11) **EP 3 856 584 B1**
(45) Veröffentlichungstag und Bekanntmachung des Hinweises auf die Patenterteilung: **17.07.2024**
(21) Anmeldenummer: 19746056.1
(22) Anmeldetag: 22.07.2019
(51) Int. Cl.: B60S 1/38, B60S 1/40

(54) **ADAPTEREINHEIT UND WISCHBLATT**
ADAPTER AND WIPER BLADE
ADAPTATEUR ET BALAI D'ESSUIE GLACE

(30) Priorität: 26.09.2018 DE 102018216489
(43) Veröffentlichungstag der Anmeldung: 04.08.2021
(73) Patentinhaber: Robert Bosch GmbH, 70442 Stuttgart (DE)
(72) Erfinder: KRAEMER, Godelieve, 76549 Huegelsheim (DE); BUBBA, Marcello, 3210 Linden (BE); BRATEC, Herve, 3012 WILSELE (BE); TRUYENS, Stijn, 3300 Tienen (BE); KRUSE, Michael, 76547 Sinzheim (DE); DEPONDT, Helmut, 3370 Boutersem (BE)
(86) Internationale Anmeldenummer: PCT/EP2019/069722
(87) Internationale Veröffentlichungsnummer: WO 2020/064170

(56) Entgegenhaltungen:
- DE-A1- 102014 208 149
- DE-A1- 102016 211 162
- US-A1- 2015 096 142

## Beschreibung

Die Erfindung betrifft eine Adaptereinheit, die zu einer Kopplung, insbesondere lösbaren Kopplung eines Wischblatts mit einem Wischarm vorgesehen ist nach Gattung des unabhängigen Anspruchs. Die Erfindung betrifft weiterhin ein Wischblatt mit einer solchen Adaptereinheit sowie ein Wischblatt zur Verwendung mit einer solchen Adaptereinheit.

### Stand der Technik

Es sind bereits Wischvorrichtungen umfassend einen Wischarm und ein Wischblatt sowie eine Adaptereinheit mit einem Drehverschluss zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten.

DE 10 2016 211 162 A1 offenbar eine gattungemäße Adaptereinheit zur Kopplung eines Wischblatts mit einem Wischarm.

### Offenbarung der Erfindung

### Vorteile

Die vorliegende Erfindung beschreibt eine Adaptereinheit, die zu einer Kopplung, insbesondere lösbaren Kopplung eines Wischblatts mit einem Wischarm vorgesehen ist, umfassend eine Wischblattadaptereinheit und eine Wischarmadaptereinheit, welche zur gelenkigen Verbindung mit der Wischblattadaptereinheit vorgesehen ist, wobei die Wischarmadaptereinheit einen senkrecht oder weitgehend senkrecht zu einer Längsrichtung oder Wischarmrichtung angeordneten Lagerbolzen aufweist, und wobei die Wischblattadaptereinheit ein Anschlussteil aufweist, welches wenigstens zwei Anlageflächen mit Lagerbohrungen aufweist, wobei die Anlageflächen zur radialen Führung des Lagerbolzens an den Stirnseiten des Lagerbolzens bei einer Montage vorgesehen sind, so dass der Lagerbolzen in einer montierten Position mit seinen beiden Enden in den Lagerbohrungen einrastet, wobei die Wischarmadaptereinheit in einer montierten Position um eine Lagerachse gegenüber der Wischblattadaptereinheit schwenkbar ist und die Lagerachse senkrecht oder weitgehend senkrecht zur Längsrichtung oder Wischarmrichtung angeordnet ist. Es wird vorgeschlagen, dass die Wischarmadaptereinheit eine Windabweiserfläche aufweist, welche dazu eingerichtet ist, eine anströmende Luft abzuweisen und das Wischblatt an eine Fahrzeugscheibe zu drücken.

Das hat den Vorteil, dass die Windabweiserfläche bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Windabweiserfläche gemäß der vorliegenden Erfindung verhindert, dass die Wischarmadaptereinheit bzw. eine Wischvorrichtung - umfassend die Wischarmadaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Wischarmadaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt.

Vorteilhaft ist die Wischarmadaptereinheit mit der Windabweiserfläche und/oder mit der Wischblattadaptereinheitaufnahme einstückig ausgebildet. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischarmadaptereinheit soll insbesondere ein Adapter verstanden werden, welches zu einer Kopplung, insbesondere lösbaren Kopplung mit einem Wischarm vorgesehen ist, und welche dazu vorgesehen ist, an eine Wischblattadaptereinheit um eine Lagerachse schwenkbar zu koppeln, wobei die Wischblattadaptereinheit dazu vorgesehen ist, das Wischblatt aufzunehmen. Vorteilhaft ist die Wischarmadaptereinheit mit der Windabweiserfläche und/oder mit dem Lagerbolzen einstückig ausgebildet.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft weist die Wischblattadaptereinheit ein Verbindungselement auf, welches dazu vorgesehen ist, mit der Wischarmadaptereinheit schwenkbar zu koppeln, beispielsweise ein Anschlussteil. Insbesondere kann ein Anschlussteil vorgesehen sein, um mit dem Lagerbolzen schwenkbar zu koppeln. Vorteilhaft ist die Wischblattadaptereinheit mit dem Kontaktbereich und/oder mit dem Verbindungselement einstückig ausgebildet. Es ist auch denkbar, dass die Wischblattadaptereinheit mit dem Wischblatt oder mit einem Wischblattbauteil einstückig ausgebildet ist.

Vorteilhaft weist das Anschlussteil Seitenwände auf, welche die Anlageflächen aufweisen. Insbesondere können die Seitenwände wenigstens eine der Lagerbohrungen aufweisen. Die Lagerbohrungen können als durchgehende Bohrungen ausgebildet sein, welche insbesondere vollständig oder weitgehend vollständig eine Seitenwand durchdringen. Es ist auch denkbar, dass wenigstens eine der Lagerbohrungen als Einbuchtung in den Seitenwänden ausgebildet sind. Beispielweise kann eine der Lagerbohrungen als eine nicht vollständig durchgehende Bohrung in einer Seitenwand ausgebildet sein. Vorteilhaft ist das Anschlussteil mit den Seitenwänden einstückig ausgebildet.

Unter einer Wischarmrichtung soll eine Richtung verstanden werden, welche in Richtung einer größten Längsausdehnung des an der Adaptereinheit montierten Wischarms angeordnet ist. Im unmontierten Zustand ist die Wischarmrichtung die Richtung an der Adaptereinheit, in die ein montierter Wischarm zeigen würde, insbesondere in einer Grundstellung. Unter einer Längsrichtung der Adaptereinheit soll eine Richtung verstanden werden, welche in Richtung einer größten Längsausdehnung der Adaptereinheit ausgerichtet ist. Vorteilhaft ist die Wischarmrichtung parallel oder weitgehend parallel zur Längsrichtung angeordnet.

Unter weitgehend parallel bzw. darunter, dass eine erste Achse weitgehend parallel zu einer zweiten Achse angeordnet ist, soll insbesondere verstanden werden, dass die erste Achse mit der zweiten Achse einen Winkel einschließt, der nicht mehr als 8°, vorteilhaft nicht mehr als 5°, besonders vorteilhaft nicht mehr als 2° von 0° abweicht.

Unter weitgehend senkrecht bzw. darunter, dass eine erste Achse weitgehend senkrecht zu einer zweiten Achse angeordnet ist, soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht.

Ein Lagerbolzen welcher in der Anlagefläche radial führbar ist und in einer montierten Position in Lagerbohrungen der Anlagefläche einrastet ist insbesondere ein Drehverschluss. Ein Drehverschluss ist besonders einfach bedienbar und erhöht damit die Betriebssicherheit. Auf diese Weise ist die Wischblattadaptereinheit besonders einfach und zuverlässig mit der Wischarmadaptereinheit koppelbar bzw. verbindbar.

Durch die in den Unteransprüchen aufgeführten Merkmale sind vorteilhafte Weiterbildungen der Adaptereinheit möglich.

Eine Aerodynamik der Adaptereinheit wird weiter verbessert, wenn die Windabweiserfläche einen Hauptwinkel zwischen 25° und 65°, bevorzugt zwischen 40° und 50° mit der Lagerachse einschließt.

Vorteilhaft ist die Lagerachse so angeordnet, dass sie in einem nicht wischenden Ruhezustand der an der Fahrzeugscheibe angebrachten Wischvorrichtung - umfassend die Adaptereinheit, das Wischblatt und den Wischarm - parallel oder weitgehend parallel zu einer Windanströmrichtung bzw. zur einer Fahrzeugfahrrichtung angeordnet ist. Im Folgenden soll unter einer Windanströmrichtung die Richtung verstanden werden, in der der Fahrtwind in einem nicht wischenden Ruhezustand der an der Fahrzeugscheibe angebrachten Wischvorrichtung anströmen würde. Besonders vorteilhaft liegt die Lagerachse in einem am Fahrzeug montierten Zustand parallel zur Fahrzeugscheibe, bevorzugt an jeder Position über eine Wischbewegung.

Dadurch, dass die Windabweiserfläche in Richtung der Lagerachse zumindest bereichsweise konkav ausgebildet ist, werden die aerodynamischen Eigenschaften weiter verbessert. Der durch Fahrtwind erzeugte Anpressdruck kann weiter erhöht werden. Unter konkav soll insbesondere verstanden werden, dass die Windabweiserfläche in die Adaptereinheit bzw. in die Wischarmadaptereinheit hineingewölbt ist.

Die Adaptereinheit wird weiter verbessert, wenn die Windabweiserfläche in Richtung der Lagerachse zumindest bereichsweise konvex ausgebildet ist. Durch einen konvexen Verlauf der Windabweiserfläche kann eine Windströmung entlang der Windabweiserfläche weitgehend laminar bzw. turbulenzfrei gehalten werden. Das ermöglicht einen stabilen und weitgehend konstanten Anpressdruck. Insbesondere werden auf diese Weise Vibrationen verhindert, welche eine störende Geräuschentwicklung entwickeln können und/oder welche die Wischarmadaptereinheit und/oder die Wischvorrichtung beschädigen bzw. in ihrer Wischleistung beinträchtigen können. Unter konvex soll insbesondere verstanden werden, dass die Windabweiserfläche aus der Adaptereinheit bzw. aus der Wischarmadaptereinheit herausgewölbt ist.

Besonders vorteilhaft ist eine Windabweiserfläche, welche bereichsweise konvex und bereichsweise konkav ausgebildet ist. Auf diese Weise kann der Anpressdruck und/oder ein Umströmverhalten des Fahrtwindes präzise an die technischen Anforderungen angepasst werden. Beispielsweise kann die Windabweiserfläche an einem windzugewandten Rand der Windabweiserfläche konvex ausgebildet ist und an einem windabgewandten Rand der Windabweiserfläche konkav ausgebildet ist.

In vorteilhaften Varianten ist die Windabweiserfläche in Richtung der Lagerachse wenigstens bereichsweise eben ausgebildet. Das ermöglicht eine präzise Anpassung des Anpressdrucks und/oder des Umströmverhaltens des Fahrtwindes.

Unter einem windzugewandten Rand soll insbesondere ein Rand der Windabweiserfläche, bevorzugt ein Teilstück eines Umfangs der Windabweiserfläche, verstanden werden, der in einem nicht wischenden Ruhezustand der an der Fahrzeugscheibe angebrachten Wischvorrichtung - umfassend die Wischarmadaptereinheit, das Wischblatt und den Wischarm - am nächsten an der Windanströmrichtung angeordnet ist, so dass der Fahrtwind zuerst an der windzugewandten Seite der Windabweiserfläche vorbeiströmt bzw. auf diese trifft. Bevorzugt ist die Windabweiserfläche so ausgebildet, dass der windzugewandte Rand in einem nicht wischenden Ruhezustand der an der Fahrzeugscheibe angebrachten Wischvorrichtung zumindest bereichsweise senkrecht oder weitgehend senkrecht zur Windanströmrichtung angeordnet.

Ein Wischblatt mit einer Adaptereinheit gemäß der vorliegenden Erfindung hat den Vorteil, dass es aufgrund der verbesserten Aerodynamik im Fahrtwind besonders vibrationsarm angeordnet ist und damit eine erhöhte Haltbarkeit aufweist.

Vorteilhaft umfasst die Adaptereinheit eine eine Wischblattadaptereinheit und eine Wischarmadaptereinheit, welche zur gelenkigen Verbindung mit der Wischblattadaptereinheit vorgesehen ist, wobei die Wischarmadaptereinheit einen senkrecht oder weitgehend senkrecht zu einer Längsrichtung oder Wischarmrichtung angeordneten Lagerbolzen aufweist, und wobei die Wischblattadaptereinheit ein Anschlussteil aufweist, welches wenigstens zwei Anlageflächen mit Lagerbohrungen aufweist, wobei die Anlageflächen zur radialen Führung des Lagerbolzens an den Stirnseiten des Lagerbolzens bei einer Montage vorgesehen sind, so dass der Lagerbolzen in einer montierten Position mit seinen beiden Enden in den Lagerbohrungen einrastet, wobei die Wischarmadaptereinheit in einer montierten Position um eine Lagerachse gegenüber der Wischblattadaptereinheit schwenkbar ist und die Lagerachse senkrecht oder weitgehend senkrecht zur Längsrichtung oder Wischarmrichtung angeordnet ist, und wobei die Wischarmadaptereinheit eine Windabweiserfläche aufweist, welche dazu eingerichtet ist, eine anströmende Luft abzuweisen und das Wischblatt an eine Fahrzeugscheibe zu drücken. Vorteilhaft ist das Wischblatt mit der Wischblattadaptereinheit gekoppelt. Besonders vorteilhaft ist das Wischblatt einstückig mit der Wischblattadaptereinheit ausgebildet.

Ein Wischblatt mit einer Wischblattadaptereinheit zur Verwendung in einer Adaptereinheit gemäß der vorliegenden Erfindung hat den Vorteil, dass das Wischblatt besonders zuverlässig mit einer Adaptereinheit bzw. mit einem Wischarmadapter verbindbar ist. Auf diese Weise wird ein Betrieb des Wischblatts besonders zuverlässig. Vorteilhaft ist das Wischblatt mit der Wischblattadaptereinheit einstückig ausgebildet.

Vorteilhaft weist die Wischblattadaptereinheit ein Anschlussteil auf, welches zur Kopplung, insbesondere lösbaren Kopplung mit einer Wischarmadaptereinheit vorgesehen ist, besonders bevorzugt mit einem Lagerbolzen. Bevorzugt weist das Anschlussteil wenigstens zwei Anlageflächen mit Lagerbohrungen auf, wobei die Anlageflächen zur radialen Führung des Lagerbolzens an den Stirnseiten des Lagerbolzens bei einer Montage vorgesehen sind, so dass der Lagerbolzen in einer montierten Position mit seinen beiden Enden in den Lagerbohrungen einrastet, wobei die Wischarmadaptereinheit in einer montierten Position um eine Lagerachse gegenüber der

Wischblattadaptereinheit schwenkbar ist und die Lagerachse senkrecht oder weitgehend senkrecht zur Längsrichtung oder Wischarmrichtung angeordnet ist

### Zeichnungen

In den Zeichnungen sind Ausführungsbeispiele der Adaptereinheit gemäß der vorliegenden Erfindung sowie des Wischblatts gemäß der vorliegenden Erfindung dargestellt und in der nachfolgenden Beschreibung näher erläutert. Es zeigen
Figur 1 eine Wischvorrichtung mit der Adaptereinheit, dem Wischblatt und einem Wischarm,
Figur 2 eine Schnittansicht der Adaptereinheit und
Figur 3 eine Draufsicht auf eine Wischblattadaptereinheit der Adaptereinheit.

### Beschreibung

In den verschiedenen Ausführungsvarianten erhalten gleiche Teile die gleichen Bezugszahlen.

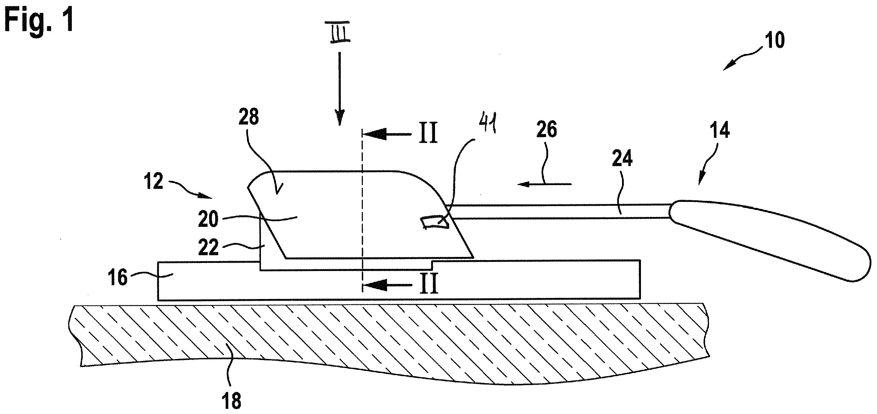

In der Figur 1 ist schematisch eine Wischvorrichtung 10 mit einer Adaptereinheit 12, einem Wischarm 14 und einem Wischblatt 16 in einer Seitenansicht gezeigt. In Figur 1 ist die Adaptereinheit in einer montierten Position abgebildet. Das Wischblatt 16 ist als Flachwischblatt ausgebildet. Das Wischblatt 16 ist zum Reinigen einer Fahrzeugscheibe 18 vorgesehen. Die Adaptereinheit 12 weist beispielsweise eine Wischarmadaptereinheit 20 auf. Die Adaptereinheit weist beispielsweise eine Wischblattadaptereinheit 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Im Ausführungsbeispiel ist die Hauptlängserstreckungsrichtung der Wischarmadaptereinheit eine Längsrichtung der Adaptereinheit. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist die Hauptlängserstreckungsrichtung des Wischblatts zumindest weitgehend parallel zur Wischarmrichtung angeordnet. Die Wischarmadaptereinheit 22 weist beispielsweise eine Windabweiserfläche 28 auf.

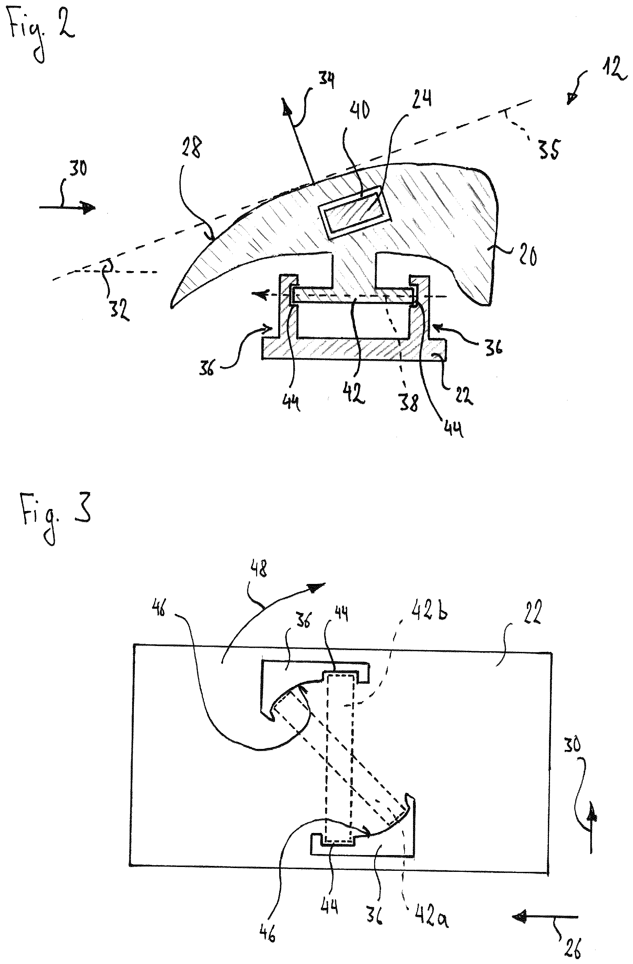

Figur 2 zeigt eine Schnittansicht auf die Adaptereinheit 12. Figur 2 ist ein entspricht Schnitt entlang der Linie II-II in Figur 1. Die Bildebene von Figur 2 ist senkrecht zur Wischarmrichtung 26 angeordnet. Die Windabweiserfläche 28 schließt mit einer Windanströmrichtung 30 einen Hauptwinkel 32 von 35° ein. Der Hauptwinkel wird zwischen der Windanströmrichtung und einer Tangentialebene eines mittleren Normalenvektors 34 der Windabweiserfläche aufgespannt. Die Tangentialebene liegt senkrecht zur Bildebene der Figur 2 bzw. parallel zur Wischarmrichtung 26 und wird in Figur 2 durch eine Schnittgrade 35 der Tangentialebene mit der Bildebene repräsentiert. Die Windabweiserfläche ist beispielhaft entlang der Windanströmrichtung konvex ausgebildet.

In Varianten der Adaptereinheit ist die Windabweiserfläche wenigstens bereichsweise konvex ausgebildet, insbesondere konvex entlang der Windanströmrichtung. Darunter, dass eine Fläche der Adaptereinheit konvex ausgebildet ist, soll insbesondere verstanden werden, dass die Fläche aus der Adaptereinheit herausgewölbt ist. In weiteren Varianten der Adaptereinheit ist die Windabweiserfläche wenigstens bereichsweise konkav ausgebildet, insbesondere konkav entlang der Windanströmrichtung. Darunter, dass eine Fläche der Adaptereinheit konkav ausgebildet ist, soll insbesondere verstanden werden, dass die Fläche in die die Adaptereinheit hineingewölbt ist.

Im Ausführungsbeispiel weist die Wischarmadaptereinheit 20 eine Wischarmöffnung 40 auf, welche dazu eingerichtet ist, den Wischarm bzw. die Wischstange 24 aufzunehmen. Die Wischarmöffnung ist beispielsweise eine Öffnung für einen Aufnahmekanal, in den der Wischarm bzw. die Wischstange einführbar ist. Der Aufnahmekanal verläuft beispielsweise weitgehend parallel zur Wischarmrichtung. Die Wischarmadaptereinheit weist im Ausführungsbeispiel ein Fixiermittel 41 auf, welches zu einer lösbaren Kopplung des Wischarms mit der Wischarmadaptereinheit vorgesehen ist (siehe Figur 1) Im Ausführungsbeispiel ist das Fixiermittel 41 beispielhaft als Rastknopf ausgebildet, welcher dazu vorgesehen ist, die Wischstange gegen eine Bewegung in Wischarmrichtung 26 zu fixieren. Im gekoppelten Zustand ist der Wischarm fest mit der Wischarmadaptereinheit verbunden. Im mit der Wischarmadaptereinheit gekoppelten Zustand ist der Wischarm gegenüber der Wischarmadaptereinheit beispielsweise weitgehend unbeweglich.

Die Wischarmadaptereinheit 20 weist beispielsweise einen Lagerbolzen 42 auf, welche dazu vorgesehen ist, mit einer Wischblattadaptereinheit 22 um die Lagerachse 38 schwenkbar zu koppeln. Die Wischblattadaptereinheit 22 ist beispielhaft dazu eingerichtet, das Wischblatt 16 aufzunehmen. Die Wischblattadaptereinheit 22 weist bevorzugt ein Anschlussteil 36 auf. Bevorzugt ist der Lagerbolzen 42 mit dem Anschlussteil 36 koppelbar, beispielsweise ist der Lagerbolzen 42 in das Schwenklager 36 einrastbar. Im Ausführungsbeispiel weist das Anschlussteil Lagerbohrungen 44 auf, in welche der Lagerbolzen 42 einrastbar ist.

Figur 3zeigt eine Ansicht auf die Wischblattadaptereinheit aus dem in Figur 1 abgebildeten Ausführungsbeispiel entlang der Richtung III in Figur 1. Die Richtung III ist senkrecht zur Wischarmrichtung 26 und senkrecht zur Lagerachse 38 angeordnet. Der Übersicht halber ist die Wischarmadaptereinheit 20 nicht vollständig abgebildet. In gestrichelten Linien ist der Lagerbolzen 42 der Wischarmadaptereinheit in zwei verschiedenen Positionen gezeigt. Der Lagerbolzen 42a zeigt eine erste Position des Lagerbolzens. Der Lagerbolzen 42b ist der Lagerbolzen in einer zweiten Position abgebildet. Die zweite Position entspricht der montierten Position, welche in den Figuren 1 und 2 gezeigt ist.

Das Anschlussteil 36 weist Anlageflächen 46 auf. Die Anlageflächen sind im Ausführungsbeispiel so geformt, dass sie abschnittsweise auf dem Umfang eines gedachten Kreises liegen. Die Anlageflächen weisen die Lagerbohrungen 44 auf bzw. führen zu den Lagerbohrungen 44. Bei der Montage wird die Wischarmadaptereinheit zunächst so an die Wischblattadaptereinheit herangeführt, dass sicher der Lagerbolzen 42b in der ersten Position befindet. In der ersten Position kontaktieren die Stirnseiten des Lagerbolzens die Anlageflächen des Anschlussteils. Anschließend wird der Lagerbolzen in einer Drehrichtung 48 gedreht. Beim Drehen des Lagerbolzens führen die Anlageflächen den Lagerbolzen an seinen Stirnseiten. Sobald sich der Lagerbolzen 42b in der zweiten Position befindet, rastet der Lagerbolzen 42b mit seinen Enden in den Lagerbohrungen 44 ein. In der zweiten Position ist der Lagerbolzen 42b parallel zur Lagerachse 38 ausgerichtet.

Vorzugsweise ist das Anschlussteil wenigstens abschnittsweise elastisch ausgebildet, insbesondere in einer Weise, dass Seitenwände im Bereich der Lagerbohrungen nach Außen in Richtung der Lagerachse 38 elastisch auslenkbar sind. Auf diese Weise wird das Einrasten des Lagerbolzens erleichtert.

Beispielhaft kann das Anschlussteil vor den Lagerbohrungen Führungskulissen aufweisen, welche dazu vorgesehen sind, dass an ihnen die Stirnseiten des Lagerbolzens entlanggleiten, bis sie in der Lagerbohrungen einrasten. Auf diese Weise wird das Einrasten des Lagerbolzens weiter erleichtert.

Im Ausführungsbeispiel ist der Lagerbolzen 42a in der ersten Position zum Lagerbolzen 42b in der zweiten Position um einen Montagewinkel von 45° verdreht. Bei der Montage wird der Lagerbolzen bzw. die Wischarmadaptereinheit um den Montagewinkel in Drehrichtung 48 in die montierte Position bzw. in die zweite Position gedreht. Ein Montagewinkel von 45° erlaubt eine sichere und schnelle Befestigung der Wischarmadaptereinheit an der Wischblattadaptereinheit. In alternativen Ausführungsformen sind auch andere Montagewinkel denkbar, insbesondere Montagewinkel zwischen 20° und 70°, bevorzugt zwischen 30° und 60°, besonders bevorzugt zwischen 40° und 50°.

## Patentansprüche

1. Adaptereinheit, die zu einer Kopplung, insbesondere lösbaren Kopplung eines Wischblatts mit einem Wischarm vorgesehen ist, umfassend eine Wischblattadaptereinheit und eine Wischarmadaptereinheit, welche zur gelenkigen Verbindung mit der Wischblattadaptereinheit vorgesehen ist, wobei die Wischarmadaptereinheit einen senkrecht oder weitgehend senkrecht zu einer Längsrichtung oder Wischarmrichtung angeordneten Lagerbolzen aufweist, und wobei die Wischblattadaptereinheit ein Anschlussteil aufweist, welches wenigstens zwei Anlageflächen mit Lagerbohrungen aufweist, wobei die Anlageflächen zur radialen Führung des Lagerbolzens an den Stirnseiten des Lagerbolzens bei einer Montage als Drehverschluss vorgesehen sind, so dass der Lagerbolzen in einer montierten Position mit seinen beiden Enden in den Lagerbohrungen einrastet, wobei die Wischarmadaptereinheit in einer montierten Position um eine Lagerachse gegenüber der Wischblattadaptereinheit schwenkbar ist und die Lagerachse senkrecht oder weitgehend senkrecht zur Längsrichtung oder Wischarmrichtung angeordnet ist, wobei die Wischarmadaptereinheit eine Windabweiserfläche aufweist, welche dazu eingerichtet ist, eine anströmende Luft abzuweisen und das Wischblatt an eine Fahrzeugscheibe zu drücken.

2. Adaptereinheit nach Anspruch 1, **dadurch gekennzeichnet, dass** die Windabweiserfläche einen Hauptwinkel zwischen 25° und 65°, bevorzugt zwischen 40° und 50° mit der Lagerachse einschließt.

3. Adaptereinheit nach einem der vorhergehenden Ansprüche, **dadurch gekennzeichnet, dass** die Windabweiserfläche in Richtung der Lagerachse zumindest bereichsweise konvex ausgebildet ist.

4. Wischblatt mit einer Adaptereinheit nach einem der vorhergehenden Ansprüche.

5. Wischblatt mit einer Wischblattadaptereinheit zur Verwendung in einer Adaptereinheit nach einem der Ansprüche 1 bis 4, wobei die Wischblattadaptereinheit ein Anschlussteil aufweist, welches wenigstens zwei Anlageflächen mit Lagerbohrungen aufweist, wobei die Anlageflächen zur radialen Führung eines Lagerbolzens eines Wischarmadaptereinheits an den Stirnseiten des Lagerbolzens bei einer Montage als Drehverschluss vorgesehen sind.

## Claims

1. Adapter unit which is provided for coupling, in particular releasable coupling, of a wiper blade to a wiper arm, comprising a wiper blade adapter unit and a wiper arm adapter unit which is provided for articulated connection to the wiper blade adapter unit, wherein the wiper arm adapter unit has a bearing pin arranged perpendicularly or largely perpendicularly with respect to a longitudinal direction or wiper arm direction, and wherein the wiper blade adapter unit has a connection part, which has at least two contact surfaces with bearing holes, wherein the contact surfaces are provided for radially guiding the bearing pin at the end faces of the bearing pin during assembly as rotary closure, such that the bearing pin latches with its two ends in the bearing holes in an assembled position, wherein the wiper arm adapter unit, in an assembled position, is pivotable about a bearing axis relative to the wiper blade adapter unit, and the bearing axis is arranged perpendicularly or largely perpendicularly with respect to the longitudinal direction or wiper arm direction, wherein the wiper arm adapter unit has a wind deflector surface which is configured to deflect an incident flow of air and to press the wiper blade against a vehicle windscreen.

2. Adapter unit according to Claim 1, **characterized in that** the wind deflector surface encloses a main angle of between 25° and 65°, preferably of between 40° and 50°, with the bearing axis.

3. Adapter unit according to one of the preceding claims, **characterized in that** the wind deflector surface is at least partially convex in the direction of the bearing axis.

4. Wiper blade having an adapter unit according to any one of the preceding claims.

5. Wiper blade having a wiper blade adapter unit for use in an adapter unit according to one of Claims 1 to 4, wherein the wiper blade adapter unit has a connection part, which has at least two contact surfaces with bearing holes, wherein the contact surfaces are provided for radially guiding a bearing pin of a wiper arm adapter unit at the end faces of the bearing pin during assembly as rotary closure.

## Revendications

1. Unité d'adaptateur prévue pour un couplage, notamment un couplage amovible d'un balai d'essuie-glace avec un bras d'essuie-glace, comprenant une unité d'adaptateur de balai d'essuie-glace et une unité d'adaptateur de bras d'essuie-glace prévue pour une liaison articulée avec l'unité d'adaptateur de balai d'essuie-glace, l'unité d'adaptateur de bras d'essuie-glace présentant un boulon de palier agencé perpendiculairement ou largement perpendiculairement à une direction longitudinale ou à une direction de bras d'essuie-glace, et l'unité d'adaptateur de balai d'essuie-glace présentant une partie de raccordement qui présente au moins deux surfaces d'appui avec des alésages de palier, les surfaces d'appui étant prévues pour guider radialement le boulon de palier sur les côtés frontaux du boulon de palier lors d'un montage en tant que fermeture rotative, de telle sorte que le boulon de palier s'enclenche dans une position montée avec ses deux extrémités dans les alésages de palier, l'unité d'adaptateur de bras d'essuie-glace, dans une position montée, pouvant pivoter autour d'un axe de palier par rapport à l'unité d'adaptateur de balai d'essuie-glace et l'axe de palier étant agencé perpendiculairement ou largement perpendiculairement à la direction longitudinale ou à la direction du bras d'essuie-glace, l'unité d'adaptateur de bras d'essuie-glace présentant une surface de déflecteur de vent qui est adaptée pour repousser un air affluant et pour presser le balai d'essuie-glace contre une vitre du véhicule.

2. Unité d'adaptateur selon la revendication 1, **caractérisée en ce que** la surface de déflecteur de vent forme avec l'axe de palier un angle principal compris entre 25° et 65°, de préférence entre 40° et 50°.

3. Unité d'adaptateur selon l'une quelconque des revendications précédentes, **caractérisée en ce que** la surface de déflecteur de vent est réalisée sous forme convexe au moins par zones dans la direction de l'axe de palier.

4. Balai d'essuie-glace avec une unité d'adaptateur selon l'une quelconque des revendications précédentes.

5. Balai d'essuie-glace avec une unité d'adaptateur de balai d'essuie-glace pour utilisation dans une unité d'adaptateur selon l'une quelconque des revendications 1 à 4, l'unité d'adaptateur de balai d'essuie-glace présentant une partie de raccordement qui présente au moins deux surfaces d'appui avec des alésages de palier, les surfaces d'appui étant prévues pour guider radialement un boulon de palier d'une unité d'adaptateur de bras d'essuie-glace sur les côtés frontaux du boulon de palier lors d'un montage en tant que fermeture rotative.
